# EUROPEAN PATENT APPLICATION

(11) **EP 0 580 149 A2**
(43) Date of publication of application: **26.01.1994**
(21) Application number: 93111699.0
(22) Date of filing: 21.07.1993
(51) Int. Cl.: A24C 5/00, G05B 19/04

(54) **Automatic cigarette manufacturing machine**

(30) Priority: 22.07.1992 IT BO920281
(71) Applicant: G.D SOCIETA' PER AZIONI, I-40133 Bologna (IT)
(72) Inventor: Neri, Armando, I-40100 Bologna (IT); Bencivenni, Marco, I-40100 Bologna (IT)
(74) Representative: Jorio, Paolo

(57) **Abstract**

An automatic machine wherein a machine shaft (2) is fitted with an angular position transducer (4) having an output (5) supplying an angular position signal (SO) correlated at each instant to the angular position of the machine shaft (2); the output of the angular position transducer being connected to a programmable electronic unit (7), which generates a number of digital signals (S1-S4) whose phase in relation to the machine shaft and whose frequency may be set and adjusted electronically.

## Description

The present invention relates to an automatic cigarette manufacturing machine.

In particular, the present invention may be used to advantage on filter assembly machines, to which the following description refers purely by way of example.

As we know, on filter assembly machines, various checks must be made synchronously with both one another and the overall operation of the machine, and, in the specific example considered, comprise checking: presence of the tobacco, good condition of the tips and lateral outer portions of the cigarettes, printing, permeability and ventilation.

At present, performance of the above checks is enabled by sensor means consisting, for example, of optical devices, one for each check, and each associated with a respective shaped disk. The disks are all fitted on to the drive shaft of the machine, and present teeth or projections, the position and angular extension of which determine the phase and duration of each check. Each disk-associated optical device thus "reads" the projections, and accordingly generates trains of control pulses for supply to the controlled members downstream. By virtue of being fitted to the same shaft, the disks thus provide for angularly correlating the various operations as required.

Control devices of the aforementioned type, however, present several drawbacks, due to the read errors caused by the high speed of the filter assembly machine and, hence, high-speed rotation of the drive shaft. In particular, at standard operating speeds, switching of the optical devices (normally inductive photocells) does not always occur at the same instant, and the control pulses are not repetitive, which defect is even further aggravated in the case of aging of the optical devices.

Moreover, whenever changes are made to the duration, phase and/or repetition of the check (e.g. for switching from one cigarette size to another), all the shaped disks must be replaced, obviously at the expense of time and money, with others specially designed to cater to the new operating times involved.

It is an object of the present invention to provide an automatic machine designed to overcome the aforementioned drawbacks.

According to the present invention, there is provided an automatic cigarette manufacturing machine comprising a machine shaft, and a control section designed to generate control signals in time with said machine shaft; characterized by the fact that said control section comprises an angular position transducer fitted to said machine shaft and the output of which supplies an angular position signal correlated at each instant to the angular position of the machine shaft; and a programmable electronic unit having an input connected to said output of said angular position transducer, for generating a number of digital signals of electronically-adjustable phase and frequency.

A non-limiting embodiment of the present invention will be described by way of example with reference to the accompanying drawings, in which:
Fig.1 shows a block diagram of the check control section of a filter assembly machine;
Fig.2 shows a series of control signals generated by the control section in Fig. 1.

Number 1 in Fig .1 indicates a filter assembly machine comprising a machine shaft 2 (the rotation speed of which is correlated to the speed of all the parts, not shown in detail, of machine 1); and a control section 3.

Machine shaft 2 is fitted with an angular position transducer consisting of a known absolute encoder 4, e.g. comprising a graduated glass disk and a photocell (not shown), and a suitable type of which, for example, is the ASI Series "Rotacord" produced by LIKA Electronic. Output 5 of encoder 4 supplies a signal SO indicating, in repetitive and highly accurate manner, the angular position of shaft 2, and which may be expressed in Gray, binary or BCD code, and transmitted over a parallel or serial line. Signal SO preferably provides for a resolution of 1/10 of a degree, which is more than sufficient even at the extremely fast operating speeds of current filter assembly machines.

Output 5 of encoder 4 is connected to input 6 of a programmable electronic control unit 7, which also presents a further input 8 connected to a keyboard 9; an output 10 connected to a display 11; and a number of outputs 12 (four in the example shown) for respective logic (ON-OFF) control signals S1-S4 for enabling a specific check to be performed in known manner.

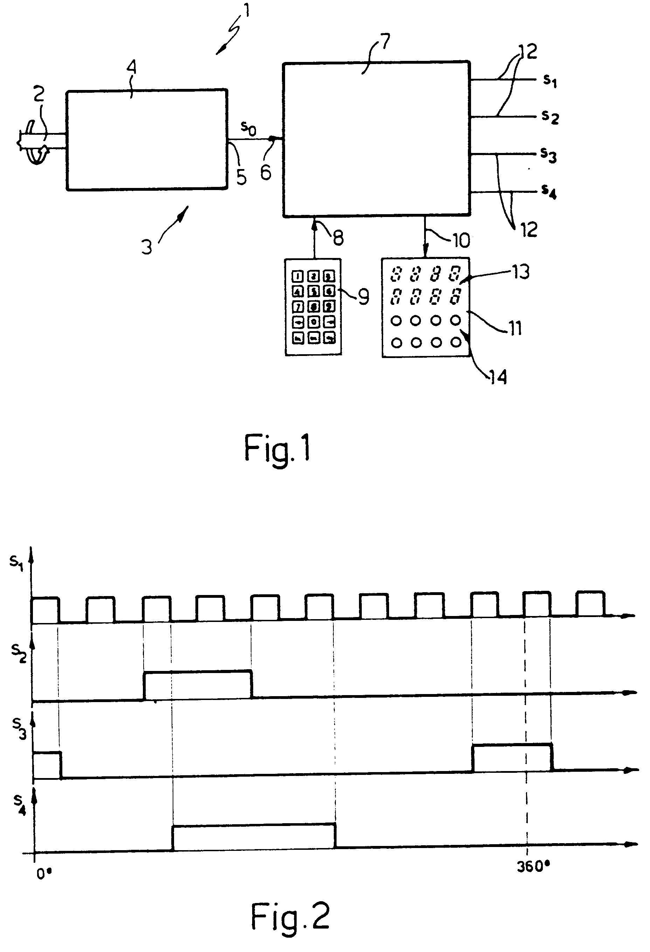

A suitable control unit 7 for the purpose of the present invention, for example, is an Omron H8PR angular positioner. Display 11 preferably comprises both a first numeric display portion 13, and a second portion 14 including single lamps (e.g. LEDs) of different colours (typically red and green). Needless to say, as opposed to consisting of separate elements as shown in Fig.1, control unit 7, keyboard 9 and display 11 may be integrated into one component.

Examples of signals S1-S4 are shown in Fig.2, wherein signal S1 presents ten control pulses, each of a duration equal to an angle of 18° of machine shaft 2; and signals S2-S4 present one pulse of a duration greater than S1. Signals S1-S4, of course, are only four examples of any number of different possibilities, the pattern of which (phase, duration and number of repetitions) depends on the type of check and the number of times it is repeated (cycles) for each rotation of machine shaft 2. Moreover, the control signals generated by unit 7 may be used, not only for check purposes, but also for electronically controlling any operation on machine 1 which must be synchronized or time-related to the other phases of the machine.

For regulating control section 3, the operator simply sets, on keyboard 9 and for each control signal S1-S4, the angular position of machine shaft 2 at which each pulse of each control signal S1-S4 is to start and end (signal phase and frequency setting), which setting may be checked on display 11.

In actual use, electronic control unit 7 receives angular position signal S0, and, on the basis of the settings entered, generates output signals S1-S4 with control pulses starting and ending exactly at the set rotation angles of machine shaft 2.

When a different frequency and/or phase setting is required, due to a change in the format or brand of the cigarettes or a phase correction, the start and end angles of the pulse need simply be reset as required on keyboard 9. The control signals may thus be changed simply and rapidly, with no mechanical replacements required, as on known machines. The control section 3 illustrated is also highly accurate, by virtue of employing a high-precision absolute encoder with a high resolving capacity, thus eliminating the timing errors typical of known machines. What is more, even errors due to aging of the component occur after a much longer period, in which case, replacement of a single encoder is more straightforward than on known machines comprising a number of disks and associated optical detecting devices.

As such, the control section described provides for maintaining the various parts of the filter assembly machine timed as required.

## Claims

1. An automatic cigarette manufacturing machine (1) comprising a machine shaft (2), and a control section (3) designed to generate control signals (S1-S4) in time with said machine shaft (2); characterized by the fact that said control section (3) comprises an angular position transducer (4) fitted to said machine shaft (2) and the output (5) of which supplies an angular position signal (SO) correlated at each instant to the angular position of the machine shaft (2); and a programmable electronic unit (7) having an input (6) connected to said output (5) of said angular position transducer (4), for generating a number of digital signals (S1-S4) of electronically-adjustable phase and frequency.

2. A machine as claimed in Claim 1, characterized by the fact that said angular position transducer comprises an encoder (4).

3. A machine as claimed in Claim 2, characterized by the fact that said encoder (4) is an absolute type.

4. A machine as claimed in one of the foregoing Claims, characterized by the fact that said programmable electronic unit (7) is connected to an input/output unit (9, 11) for setting the phase and duration of said digital signals (S1-S4).
